# EUROPEAN PATENT APPLICATION

(11) **EP 3 260 269 A1**
(43) Date of publication of application: **27.12.2017**
(21) Application number: 16752199.6
(22) Date of filing: 22.01.2016
(51) Int. Cl.: B29C 47/14, B29C 47/88, B29C 55/04, B29C 55/12, B29C 67/20, C08J 9/26

(54) **METHOD FOR PRODUCING MICROPOROUS PLASTIC FILM**

(30) Priority: 20.02.2015 JP 2015031392
(71) Applicant: Toray Industries, Inc., Tokyo, 103-8666 (JP)
(72) Inventor: ICHINOMIYA, Takashi, Otsu-shi Shiga 520-8558 (JP); SUGATA, Masami, Tokyo 1038666 (JP); OKUNO, Masato, Togichi 3292763 (JP)
(74) Representative: Webster, Jeremy Mark
(86) International application number: PCT/JP2016/051780
(87) International publication number: WO 2016/132810

(57) **Abstract**

Provided is a method for producing, with high productivity, a microporous plastic film having excellent physical properties and mechanical properties by preventing slippage even in wet roller drawing. This method for producing a microporous plastic film is a method for producing a uniaxially or biaxially oriented microporous plastic film by kneading a diluent and a polyolefin polymer with an extruder, discharging the diluent-kneaded polymer from a die in a sheet form, cooling and solidifying the sheet discharged from the die on a drum, then reheating the solidified sheet, drawing the same in a sheet conveying direction with a plurality of rollers, cooling the sheet drawn in the sheet conveying direction, then gripping both ends of the sheet with clips, introducing the sheet into a tenter, and then cleaning the diluent, wherein: there are at least two sections in which the sheet is drawn between said plurality of rollers; and the ratio of each of the plurality of drawing sections is substantially the same.

## Description

### Technical Field of the Invention

Our invention relates to a method for producing a microporous plastic film.

### Background Art of the Invention

Microporous plastic films have been broadly used as a substance separation membrane, permselective membrane, separator material of electrochemical element such as alkali rechargeable battery, lithium rechargeable battery, fuel cell and capacitor or the like. A separator for lithium ion battery is a particularly suitable application.

Patent documents 1 and 2 disclose a wet process for producing a microporous film made of plastic like polyolefin. In the wet process, a diluent such as liquid paraffin is added to a polymer, and is kneaded and dispersed, and then discharged through a die lip onto a cooling drum to be cooled and solidified to form a gel sheet, which is oriented uniaxially or biaxially by a roller method or tenter method for improving strength to produce a film having micropores by extracting the diluent.

Particularly by the roller method drawing the sheet in the travelling direction by a plurality of rollers, the lengthwise draw ratio can be changed freely by only changing a roller speed. By the other tenter method, the microporous plastic film can be improved in mechanical property because polyolefin molecules can be oriented with strong orientation in the drawing direction. As disclosed in Patent document 1, the roller method applied to the wet process might make the diluent bleed out from a gel sheet surface under a pressure caused by heat or tension while the conveying and drawing are performed in the presence of the diluent between film and roller. To draw such a gel sheet, the sheet is sufficiently cooled below the crystallization ending temperature of the polymer and is heated again below the melting point as disclosed in Patent document 2 where it is heated above the crystallization dispersion temperature.

### Prior art documents

### Patent documents

Patent document 1: JP2009-249480-A
Patent document 2: JP2013-530261-A

### Summary of the Invention

### Problems to be solved by the Invention

The wet roller method disclosed in Patent document 1 might have a problem that the diluent intervening between the roller and film lubricates to meander or fail a desirable draw ratio because of slip.

According to Patent document 1, the above-described slip can be prevented when a tension over the lengthwise draw tension is given between the lengthwise drawing machine and the lateral drawing machine (tenter), wherein the tension should preferably be greater than the draw tension by 20%. However, we found that such a great tension over the draw tension drew the sheet downstream of the lateral drawing machine to cause an undesirable slip adversely and therefore the slip couldn't be prevented.

According to Patent document 2, a predetermined range of contact time, contact angle and contact length between the lengthwise drawing roller and the sheet can prevent the slip and the sheet surface from being damaged. However, we found even such measures couldn't fully prevent the slip when we had an increased draw speed, a decreased draw temperature or an increased draw ratio in order to improve physical properties and mechanical properties of the microporous plastic film.

Accordingly, it could be helpful to provide a method for producing a microporous plastic film excellent in physical properties and mechanical properties by a high-speed drawing without slip under a high productivity.

### Means for solving the Problems

To achieve the above-described object, our method for producing a microporous plastic film comprises: kneading a diluent and a polyolefin resin with an extruder; discharging the polyolefin resin kneaded with the diluent from a die lip in a sheet shape; cooling and solidifying the sheet discharged from the die lip on a drum; reheating and drawing the solidified sheet with a plurality of rollers in a sheet conveying direction; cooling the sheet drawn in the sheet conveying direction; gripping both ends of the sheet with clips; introducing the sheet into a tenter; and washing the diluent out to prepare a uniaxially or biaxially oriented microporous plastic film, wherein the sheet is drawn in two or more sections having substantively the same draw ratio between the rollers.

### Effect according to the Invention

Our invention can produce, with high productivity, a microporous plastic film having excellent physical properties and mechanical properties by preventing slip even in wet roller drawing.

### Brief explanation of the drawings

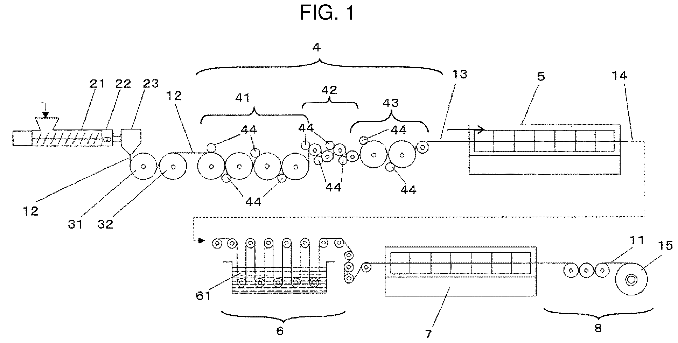

[Fig. 1] Fig. 1 is a schematic side view showing an example of production process of our microporous plastic film.

### Embodiments for carrying out the Invention

Hereinafter, desirable examples of our microporous plastic film will be explained with reference to figures. Fig. 1 is a schematic side view showing an example of production process of our microporous plastic film.

To desirably produce microporous plastic film 11, polyolefin resin is mixed with diluent and heated to melt to prepare polyolefin resin solution. The diluent decides a structure forming micropores of the microporous plastic film and contributes to improvement of drawability (for example, improvement as reduction of unevenness at a draw ratio for exhibiting a strength) at the time of drawing film.

The diluent is not limited particularly, as far as it can be mixed or dissolved with polyolefin resin. The diluent may be mixed with polyolefin in a melt-kneading state. Alternatively, it may be mixed with solid solvent at room temperature. Such prepared solid diluent may be stearyl alcohol, ceryl alcohol, paraffin wax or the like. It is preferable that the diluent is a liquid at room temperature from viewpoints of prevention of uneven drawing and coating convenience at a later stage. The liquid diluent may be a fatty series such as nonane, decane, decalin, paraxylene, undecane, dodecane and liquid paraffin; a cyclic fatty series or an aromatic hydrocarbon; a mineral oil fraction having a boiling point of the same range as the compounds thereof; or a phthalate ester, such as dibutyl phthalate and dioctylphthalate which are liquids at room temperature. To obtain a gelled sheet stably containing liquid diluent, it is preferable to employ a nonvolatile diluent such as liquid paraffin. For example, it is preferable that the liquid diluent has a viscosity of 20 to 200 cSt at 40°C.

It is preferable that the polyolefin resin of 10 to 50 mass% is mixed with the diluent in total 100 mass% of polyolefin resin and diluent, from a viewpoint of good formability of extruded product. The polyolefin resin solution may be melt-kneaded uniformly by a calendar, mixer or extruder 21 having a screw as shown in Fig. 1.

It is preferable that the polyolefin resin solution in extruder has a predetermined temperature of which range is 140 to 250 °C for polyethylene composition and is 190 to 270 °C for polypropylene-containing composition, as depending on resin kind. The polyolefin resin solution which has been melt-kneaded by extruder 21 is discharged through a slit section of die lip 23 into a sheet while it is measured with gear pump 22 as needed.

The polyolefin resin solution which has been melt-kneaded by extruder 21 is discharged through a slit section of die lip 23 into a sheet while it is measured with gear pump 22 as needed. Such discharged gelled sheet 12 is solidified as contacting first cooling drum 31. Where, gelled sheet 12 becomes a pillar part with crystal structure made of the polyolefin supporting pores of microporous plastic film 11. Gelled sheet 12 becomes in a gel state since it includes the diluent melt-kneaded in extruder 21. A part of the diluent bleeds out from sheet surface by cooling gelled sheet 12 so that the sheet with wet surface made by the diluent is conveyed on first cooling drum 31. The thickness of gelled sheet 12 can be adjusted by adjusting the cooling drum speed relative to the flow rate from the die lip slit section according to discharge rate.

It is preferable that first cooling drum 31 has a temperature of 15 to 40 °C, which may affect on the crystal structure of gelled sheet 12. It is because the final cooling temperature should be below the crystallization ending temperature. The molecular orientation tends to advance in a later drawing process when the higher-order structure is fine. To make up for cooling time, it is possible, that the diameter of first cooling drum 31 is enlarged, that second cooling drum 32 is added to first cooling drum 31 or that a plurality of cooling drums are further added. To make the crystal structure precise and uniform in gelled sheet 12, it is preferable that a parameter, such as convey speed, drum temperature, drum size and the number of drums, is designed in view of the cooling speed. For example, even when a target sheet temperature is 30°C, first cooling drum 31 may be around 20°C because too high speed might cause insufficient heat conduction. Besides, it is preferable that humidity is lowered by air conditioning when the temperature is below 25°C. First cooling drum 31 may have a shape of roller or belt. It is preferable that a surface of cooling drum 31 is made of a material which is excellent in shape stability and working accuracy to keep the roller speed constant. Such a material may be metal, ceramic or fiber composite material. It is particularly preferable that the surface is made of a metal which is excellent in heat conduction to a film. It is possible to perform non-adhesion coating or rubber coating on it to the extent that conduction is not obstructed. It is preferable that the surface of sheet and roller are made of metal including metal plating which is excellent in scratch resistance and heat conductivity and is not swelled by the bled-out diluent making wet state on the surface.

It is preferable that cooling drums 31 and 32 are provided with a conventional heat pump or cooling device in addition to an internal flow path for flowing refrigerant to control the surface temperature. The roller is driven to rotate by a rotation driving means such as motor at a predetermined speed while a speed-changing mechanism may be provided between rollers to apply draw tension or relaxation according to expansion and shrinkage of the sheet. Alternatively, each roller may be provided with a motor to achieve function like the speed-changing mechanism by accurately adjusting the speed by inverter or servo.

In Fig. 1, the top side of gelled sheet 12 is discharged from die lip 23 and contacts first cooling drum 31 which first contacts it, and then is rapidly cooled with refrigerant at the above-described temperature. On the other hand, the side opposite to the side contacting the above-described first cooling drum 31 is slowly cooled with air as shown in Fig. 1. Although it is not illustrated in the figures, it is preferable that the side opposite to the side contacting first cooling drum 31 is cooled by forced circulation with air nozzle or air chamber to make a rapid cooling of the opposite side. Such a configuration would be suitable to such a case that the conveying speed is high or the gelled sheet is too thick to conduct heat sufficiently to first cooling drum 31. Also, the opposite side can be improved in cooling ability by providing a refrigerant-flowing nip roller in which refrigerant flows inside opposite to first cooling drum 31.

To prevent wet gelled sheet 12 from meandering or degrading the cooling efficiency by lubrication, it is possible that the sheet is pushed onto first cooling drum 31 with a contacting means such as nip roller, jet nozzle, suction chamber and electrostatic application. Such a contacting means can improve the travelling property and cooling efficiency of gelled sheet 12 to enable easy setting of the cooling speed and the final cooling temperature.

Other than first cooling drum 31, it is preferable that gelled sheet 12 is depressed with a nip roller onto second cooling drum 32 or other conveying roller to improve coefficient of friction which has been decreased on the mirror surface. It is preferable that the surface of nip roller is made of rubber-like elastic material which can depress gelled sheet 12 uniformly onto uneven thickness of gelled sheet 12, deflection of roller and slight surface unevenness. The rubber-like elastic material is preferably a general vulcanized rubber such as Nitrile isoButylene-isoprene Rubber (NBR), Chloroprene Rubber (CR), Ethylene Propylene Rubber (EPDM) and Hypalon rubber (CSM). When gelled sheet 12 or conveying roller has a high temperature like 80°C or higher, it is particularly preferable to employ the EPDM or CSM. Under a higher temperature, it is preferable to employ a silicone rubber or a fluorine rubber as well as the vulcanized rubber. It is preferable to employ a rubber which is little swelled by diluent to prevent the roller from having a distorted shape over time.

Next, gelled sheet 12 is oriented in a sheet-conveying direction with a plurality of roller groups in lengthwise drawing process 4, and then both ends of uniaxially oriented sheet 13 are gripped by a conventional clip to be oriented in a sheet width direction (direction orthogonal to the conveying direction) while the sheet is conveyed in the travelling direction while heated and kept warm in an oven. Such a drawing process can achieve a high productivity and characteristics such as strength and air permeability of microporous film. The drawing process in the sheet-conveying direction (which may be called "lengthwise drawing") as well as driving process is performed with a roller having a metal surface and a temperature control mechanism such as conventional heater inside. To ensure the freedom of roller path, it is possible to provide an idler roller which is not driven and not shown in Fig. 1. Such an idler roller should have small bearing and inertia loss so that a small rotation power is sufficient because the coefficient of friction is small between wet film and roller, and should not be provided more than needed.

Alternatively, like first cooling drum 31, it is preferable that heating roller group 41 or drawing roller group 42 has an internal structure in which the roller is provided with a flow path for heat medium such as vapor and pressured hot water. It is possible that the roller is supported as rotatable with bearings and a shaft end is connected to a heat-medium supply pipe with a rotary joint for supplying heat medium without obstructing the rotation of roller to supply heat medium to the inside.

It is preferable that the drawing is performed at a draw ratio of 4 to 12 in a sheet conveying direction although depending on the gelled sheet thickness. To improve strength and productivity, it is preferable that the drawing is performed at an area ratio of 30 or more in a sheet width direction together with the sheet conveying-directional drawing. It is preferable that the area ratio is 40 or more, preferably 60 or more.

It is preferable that a drawing temperature is a melting point of polyolefin resin or less. It is preferable that the temperature is in a range of [crystal dispersion temperature Tcd of polyolefin resin] to [melting point of polyolefin resin]. For example, it is preferable that the temperature is 80 to 130 °C for polyethylene resin, preferably 100 to 125 °C. After the drawing, a cooling process is performed down to these temperatures.

Thus performed drawing cleaves a higher order structure formed on the gelled sheet to miniaturize crystal phase and form many fibrils. The fibrils are three-dimensionally connected irregularly to form a web structure. It is suitable for a battery separator because the drawing improves mechanical strength and enlarges fine pores.

Thus obtained uniaxially oriented sheet 13 or biaxially oriented sheet 14 can be washed to remove diluent and dried up to make microporous plastic film 11 by a conventional technology as disclosed in WO2008/016174. To make microporous plastic film 11, it is possible that dry drawing process 7 is performed to reheat and redraw the sheet after washing process 6. Re-drawing process 7 may be performed with a roller or a tenter. Also, heat treatment may be performed to adjust physical properties and remove residual distortion through the process. Depending on intended purposes, it is possible that the surface of microporous plastic film 11 is subject to a surface treatment such as corona discharge or functional coating with heat-resistant particles.

Although heating roller group 41 and drawing roller group 42 are common to each other in terms of heating and heat-keeping function of gelled sheet 12 and variable roller rotation speed, drawing roller group 42 comprises a roller to substantively draw gelled sheet 12 and generates a peripheral speed difference to permanently deform gelled sheet in the travelling direction. More particularly, drawing roller group 42 is defined as rollers which substantively draw it as generating 3% or more of peripheral speed difference to the upstream roller.

In Fig. 1, included diluent bleeds out from gelled sheet 12 by being cooled on cooling drums 31 and 32. The diluent bleeds out even by stress derived from conveying tension. For the same reason, gelled sheet 12, oriented films 13 and 14 have a surface wet with diluent after being discharged from die lip 23 before the diluent is removed in washing process 6. In particular, gelled sheet 12 is heated up to the above-described drawing temperature with heating roller group 41 or the like in lengthwise drawing process 4, so that the heating accelerates the bleeding out of the diluent. Such amount of bleeding out is great at a part from first cooling drum 31 to heating roller group 41 upstream of lengthwise drawing process 4. Because the diluent bleeding out drops along the roller surface in Fig. 1, it is preferable that a pan (not shown) to collect it to be discarded or reused is provided.

Gripping force (frictional force) is necessary between the roller and gelled sheet 12 to convey gelled sheet 12 without meandering in a travelling direction. Particularly in drawing roller group 42 where a high tension is generated by drawing, a high gripping force balancing the drawing tension is required to achieve a necessary draw ratio. The diluent having bled out as described above intervenes between the roller and gelled sheet 12 in lubrication state to cause a deterioration of the gripping force required for conveyance and drawing.

In Fig. 1, drawing roller group 42 consists of four drawing rollers to provide three drawing sections between the first and second, the second and third, and the third and fourth drawing roller. These drawing sections are supposed to have substantively the same draw ratio. The substantively the same draw ratio may be achieved by allocating the same draw ratio to each drawing section such that 7^(1/3) = 1.913 of draw ratio is allocated to each in a case of 7 times of lengthwise draw ratio in total. The term "substantively" means that some difference of draw ratio is accepted like 1.93 x 1.9 x 1.91 = 7. The difference within ±3% can be accepted for average value of 1.913 times. In this example, the first section has a difference accepted as "substantively the same" because of | (1.93 - 1.913) / 1.913 x 100 | = 0.9% (<3%). Similarly, the second section has a difference accepted as "substantively the same" because of | (1.9 - 1.913) / 1.913 x 100 = 0.7% (<3%). As well, the third section has a difference accepted as "substantively the same" because of (1.91 - 1.913) / 1.913 x 100 = 0.3% (<3%).

When all sections have the same draw ratio, slip can be prevented by suppressing extremely great drawing tension concentrated to one part. The slip is suppressed even by friction force derived from appropriate drawing tension generated on each roller.

When the drawing is performed at equally-allocated draw ratio in some drawing sections, distortion speed as a whole lengthwise drawing decreases to increase neck-in caused by drawing gelled sheet 12. Because the width of sheet 13 exit from lengthwise drawing is narrower than the first step drawing, the same lateral draw ratio can make a higher lateral draw ratio so that characteristics such as strength of microporous plastic film can flexibly be controlled.

It is preferable that sections of which draw ratios are substantively the same as shown in Fig. 1 have substantively the same winding angle to front and rear drawing rollers. It is preferable that air sliding distances are the same. As a result, the friction force to rollers can be equaled so that a certain site can be prevented from being either hard to slide or much slidable as corresponding to drawing tension in each section. Consequently, such a drawing without meandering and slip can achieve a high productivity and characteristics such as strength and air permeability of microporous film. Further, it is possible that nip roller 44 is provided on drawing roller group 42 as shown in Fig. 1 to obtain higher friction force. It is preferable that contact position and pressure of nip roller are the same in a section of the same draw ratio.

There should be two or more sections to perform the drawing between rollers. Another embodiment may perform the drawing by two of them. It is possible that lengthwise draw ratio of 7 times may be achieved by allocating the same draw ratio to each drawing section such that 7^(1/2) = 2.645. As well, it is preferable that the equally allocated drawing sections have the same roller contact angle, contact length, air sliding distance and nip roller layout. Namely, these drawing sections should have the same pathline.

Here, the drawing tension at the downstream side is balanced by receiving with the clip which grips the end of sheet 13 mainly in lateral drawing process 5. When a ratio ([travelling speed of clip] - [peripheral speed of drawing roller (B)] / [peripheral speed of drawing roller (B)]) of travelling speed of clip at the most upstream side in conveying direction of lateral drawing process 5 to the peripheral speed of the last drawing roller is always the same, the downstream drawing tension is balanced to the clip of lateral drawing process to prevent gelled sheet 12 from slipping in the lateral drawing process.

It is more preferable that nip roller 44 is provided on heating roller group 41 or cooling roller group 43 as shown in Fig. 1, so that the drawing tension is prevented from transmitting to the upstream or downstream side to generate slip.

Although cooling roller group 43 may partially bear the drawing tension, it may not have a gripping force required to prevent the slip. Therefore it is preferable that the speed is equaled to the speeds of lateral drawing process 5, downstream drawing roller and sheet 13. Before the oriented sheet is fed to lateral drawing process 5, it is possible that the sheet is once cooled and conveyed to a tenter oven to make the process paper feed of uniaxially oriented sheet 13 easy while the crystal structure formed by the lengthwise drawing is solidified in a case of lateral drawing, so that a highly oriented and highly strengthened microporous plastic film can be prepared. When rollers after the last drawing roller are also a cooling roller, it can be cooled at the same time of finishing the drawing to prevent unnecessary size distortion and tension change. It is preferable that a tension meter is provided at a part from drawing roller group 42 to lateral drawing process 5 to obtain measured values, so that the speed ratio can be adjusted accurately to balance the tension.

As described above, it is preferable that the lengthwise draw ratio is 4 to 12 times in terms of total draw ratio. The total draw ratio of 4 or more can disperse uneven thickness of gelled sheet 12 and sufficiently achieve mechanical properties such as strength and elastic modulus of sheet obtained by drawing. The total draw ratio of 12 or less can make it hard to generate breakage, excessive drawing tension and slip in the drawing process.

It is preferable that the nip pressure is 300 to 2,000 [N/m] per unit width without meandering by excessively pressing with a pair of roller conventionally, although the pressure of nip roller 44 may be adjusted and changed for each driving roller naturally.

It is preferable that the surface of nip roller is made of soft rubber-like elastic material which can depress gelled sheet 12 uniformly onto uneven thickness of gelled sheet 12, deflection of roller and slight surface unevenness. Because the lengthwise drawing process accompanies conveyance above the heat dispersion temperature in particular, the material is preferably a heat-resistant rubber such as EPDM and Hypalon rubber. It is preferably silicone rubber or fluoro-rubber. It is preferable to employ a rubber which is little swelled by diluent to prevent the roller from having a distorted shape over time.

It is possible that a nip is performed along a tangent line substantively with a nip roller to prevent air bank from generating when introducing gelled sheet 12 into heating roller or drawing roller as shown in Fig. 1, so that slip and meandering can be prevented as improving uniformity of thickness and appearance quality.

It is preferable that the roller has a surface roughness of 0.2 to 40 µm at the maximum height. To make a mirror surface, the surface roughness is preferably 0.2 to 0.8 µm. To make a sufficiently rough surface, the surface roughness is preferably 20 to 40 µm. Because the surface of the roller is wet with the diluent, the mirror surface has a low coefficient of friction caused by lubrication. The rough surface has an increased coefficient of friction caused by less or no lubrication because the diluent discharges from the unevenness. Although the mirror surface and the rough surface may be combined as needed, it is basically preferable that the mirror surface is provided from viewpoints of maintenance such as cleaning and speed control precision, preferably with a certain lubricant with diluent to prevent the sheet from having uneven appearance.

To prevent the surface of gelled sheet from being roughed by nipping when gripping force of nip roller is ensured as in our invention, it is particularly preferable that the driving roller has a mirror surface of which maximum height is 1S, or 1µm or less, preferably 0.2 to 0.8 µm. To make such a mirror surface, the nip roller surface may be made of metal or ceramic as described above.

### [Examples]

Hereinafter, our invention will be explained with reference to Examples although it is not limited to these Examples in particular.

### [Example 1]

A mixture is prepared by dry-blending of 0.375 parts by weight of tetrakis[methylene-3-(3,5-ditertiary butyl-4-hydroxyphenyl)-propionate] methane together with 100 parts by weight of polyethylene (PE) composition which comprises 40 mass% of ultrahigh molecular weight polyethylene having mass average molecular weight (Mw) of 2.5x10⁶ and 60 mass% of high-density polyethylene having Mw of 2.8x10⁵.

Thus obtained mixture is fed to twin-screw extruder 21 at flow rate of 97kg/hr by a film forming method shown in Fig. 1. Liquid paraffin as a diluent is fed at flow rate of 291 kg/hr to be blended at 210°C.

Thus obtained polyethylene solution is supplied into die lip 23 as being measured by a gear pump and the polyethylene solution at 210°C is discharged on first cooling drum 31 adjusted to 35°C by waterflow to form gelled sheet 12.
First cooling drum 31 is driven to rotate at 10m/min.

Gelled sheet 12 is subject to sampling with 10mm square before introduction to lengthwise drawing process 4 to find that the thickness is 1.5mm in 10 times average of contact-type thickness meter. Since bled-out diluent adheres to the surface, the above-described thickness measurement includes ±0.1mm variation at the maximum

Gelled sheet 12 is heated to 110°C on the sheet surface with heating roller group 41 and a metal waterflow roller as the first drawing roller. Between heating roller group 41 and the first roller of each drawing roller group 42, the rotation speed of motor directly connected to the roller is controlled to make the downstream side faster by 1% of speed difference according to thermal expansion of the sheet. Drawing roller group 42 consists of 4 rollers shown in Fig. 1. Nip roller 44 of which surface is coated with rubber is provided onto each roller to perform lengthwise drawing by speed difference between rollers. The speed is controlled to set to 9 the total draw ratio of sheet 13 passing lengthwise drawing process 4, wherein the speed of first cooling drum 31 is set to 10m/min, speed ratio from heating roller group 41 to drawing roller group 42 is set to 1%, the speed of first drawing roller is set to 10.4m/min, the speed of second drawing roller is set to 21.35m/min, the speed of third drawing roller is set to 43.83m/min and the speed of fourth drawing roller is set to 90m/min. Three drawing sections have substantively the same draw ratio as 2.053 times.

Oriented film 13 is cooled on four rollers of cooling roller group 43 including the last roller of drawing roller group 42 to adjust the waterflow roller temperature to make the sheet temperature 50°C. The most upstream clip speed in conveying direction of lateral drawing process 5 is set to -2%, so that the last drawing roller and following cooling roller group 43 have the same speed of 88.2m/min as sheet 13 to shrink.

From first cooling drum 31, all roller surfaces in lengthwise drawing process 4 are made of steel coated with hard chromic plating of which surface roughness is 0.4µm (0.4S) at the maximum height. As shown in Fig. 1, total ten upstream nip rollers are provided at each part from heating roller group 41 to cooling roller group 43.

Both ends of oriented film 13 are gripped with a clip to perform lateral drawing at draw ratio of 7 times at 115°C in an oven, and then biaxially oriented film 14 cooled down to 30°C is washed in a washing bath of methylene chloride kept at 25°C to remove liquid paraffin. The washed film is dried up in a dry kiln kept at 60°C and then is drawn again in redrawing process 7 at areal ratio of 1.2 times in lengthwise and lateral directions. The heat treatment is performed for 20 seconds by 88.2m/min at 125°C to prepare microporous plastic film 11 having thickness of 16µm and width of 2,000mm.

### [Example 2]

In a configuration shown in Fig. 1, the speed of first cooling drum 31 is set to 10m/min, speed ratio from heating roller group 41 to the second drawing roller is set to 1%, the speed of second drawing roller is set to 10.5m/min, the speed of third drawing roller is set to 30.74m/min, and the speed of fourth drawing roller is set to 90m/min. Two drawing sections between the second and third drawing rollers and between the third to fourth drawing rollers have substantively the same draw ratio as 2.928 times. The other conditions are the same as Example 1.

### [Comparative Example 1]

In a configuration shown in Fig. 1, the speed of first cooling drum 31 is set to 10m/min, speed ratio from heating roller group 41 to the third drawing roller is set to 1%, the speed of third drawing roller is set to 10.6m/min, the speed of fourth drawing roller is set to 90m/min, and drawing sections have draw ratio of 8.5 times per section. Total lengthwise draw ratio is 9 times which is the same as Examples. The other conditions are the same as Example 1.

### [Comparative Example 2]

In a configuration shown in Fig. 1, the speed of first cooling drum 31 is set to 10m/min, speed ratio from heating roller group 41 to the first drawing roller is set to 1%, the speed of second drawing roller is set to 22.88m/min, the speed of third drawing roller is set to 45.76m/min, and the speed of fourth drawing roller is set to 90m/min. Three drawing sections don't have substantively the same draw ratio because of difference over 3% relative to average equally-allocated draw ratio of 2.928 times at the first section of 2.2 times, the second section of 2 times and the third section of 1.967 times. The other conditions are the same as Example 1.

### [Slip on drawing roller]

The speeds of sheet and roller are measured by 1% accuracy including installation accuracy with a non-contact Doppler velocimeter (made by ACT Electronics Corp., model 1522). For all Examples and Comparative Examples, slip of film 11 before drawing is evaluated according to the following standards.
No good: The speed difference between roller and sheet is 10% or more of roller rotation speed.
Acceptable: The speed difference between roller and sheet is 5% or more and less than 10% of roller rotation speed.
Good: The speed difference between roller and sheet is less than 5% of roller rotation speed.

### [Meandering amount in lengthwise drawing process]

The amount of meandering in lengthwise drawing process 4 is evaluated according to the following standards.
No good: Meandering amount is 10mm or more.
Acceptable: Meandering amount is 5mm or more and less than 10mm.
Good: Meandering amount is less than 5mm.

### [Physical properties and mechanical properties of microporous plastic film]

The Gurley impermeability is determined according to JIS P8117 with Oken type Impermeability Tester (made by Asahi Seiko Co., Ltd., EGO-1T).

The thrust strength is determined from the maximum load applied when a needle having 1mm diameter and spherical tip (Radius of curvature R=0.5mm) is pricked at 2mm/sec into a microporous membrane having membrane thickness T1. The measured maximum load La is converted to Lb which would be the maximum load when membrane thickness is 16µm according to the following formula: Lb = (La x 16) /T1 to calculate the thrust strength [N/16µm].
Good: The Gurley impermeability is 250sec ± 20sec while the thrust strength is 6N or more.
No good: Outside the range for the above-described Good

**[Table 1]**

| | Sectional draw ratio | | | Total lengthwise draw ratio |
|---|---|---|---|---|
| | Between 1st and 2nd drawing rollers | Between 2nd and 3rd drawing rollers | Between 3rd and 4th drawing rollers | |
| Example 1 | 2.053 | 2.053 | 2.053 | 9 times |
| Example 2 | - | 2.928 | 2.928 | 9 times |
| Comparative Example 1 | - | - | 8.5 | 9 times |
| Comparative Example 2 | 2.2 | 2.0 | 1.967 | 9 times |

**[Table 2]**

| | Conveyance | | Physical properties, mechanical properties | | |
|---|---|---|---|---|---|
| | Slip on drawing roller | Meandering | Thrust strength [N] | Gurley impermeability [sec] | Comprehensive evaluation of physical properties |
| Example 1 | Good | Good | 7 | 230 | Good |
| Example 2 | Acceptable | Acceptable | 6 | 245 | Good |
| Comparative Example 1 | No good | No good | - | - | - |
| Comparative Example 2 | No good | No good | 5 | 350 | No good |

By comparing Examples and Comparative Examples, it is found that all Examples have two or more sections having substantively the same draw ratio in which drawing is performed between a plurality of rollers. Therefore slip can be prevented with friction force derived from appropriate drawing tension generated on each roller by suppressing extremely great drawing tension concentrated to one part. As a result, microporous plastic film 11 is produced stably as suppressing slip and meandering. Specifically in Example 1, the draw ratio is allocated equally over three sections to stably perform the drawing.

In contrast, a microporous plastic film cannot be provided with desirable physical properties and mechanical properties in Comparative Example 1 because excessively great drawing tension is generated to one drawing section so that the slip and meandering are not prevented.

Even in Comparative Example 2, substantively different draw ratios among sections cause wrinkles derived from local unbalance of feed rate of gelled sheet 12 in addition to slippage and meandering, so that a microporous plastic film cannot be sampled. The strength and impermeability cannot be measured by this problem.

As described above, our invention makes it possible to provide a microporous plastic film excellent in strength and physical properties as maintaining a travelling stability in a drawing condition where the drawing is performed to give the microporous film desirable properties.

### Industrial Applications of the Invention

Our microporous plastic film is applicable, but not limited in particular, to a separator used for electrochemical reaction device such as rechargeable battery, fuel cell and capacitor as well as a functional web such as filtration membrane, print film and clothing material.

### Explanation of symbols

11: microporous plastic film
12: gelled sheet (film)
13: uniaxially oriented sheet (film)
14: biaxially oriented sheet (film)
15: microporous plastic film roll
21: extruder
22: gear pump
23: die lip
31: first cooling drum
32: second cooling drum
4: lengthwise drawing process
41: heating roller group
42: drawing roller group
43: cooling roller group
44: nip roller
5: lateral drawing process
6: washing/drying process
61: washing solvent
7: re-drawing heat-treatment process
8: take-up process

## Claims

1. A method for producing a microporous plastic film, the method comprising:
kneading a diluent and a polyolefin resin with an extruder;
discharging the polyolefin resin kneaded with the diluent from a die lip in a sheet shape;
cooling and solidifying the sheet discharged from the die lip on a drum;
reheating and drawing the solidified sheet with a plurality of rollers in a sheet conveying direction;
cooling the sheet drawn in the sheet conveying direction;
gripping both ends of the sheet with clips;
introducing the sheet into a tenter; and
washing the diluent out to prepare a uniaxially or biaxially oriented microporous plastic film, wherein
the sheet is drawn in two or more sections having substantively the same draw ratio between the rollers.

2. The method for producing a microporous plastic film according to claim 1, wherein the sheet is wound by substantively the same angle on front and rear rollers between which the drawing is performed.

3. A microporous plastic film produced by the method according to claim 1 or 2.

4. A battery separator comprising the microporous plastic film according to claim 3.

5. A battery comprising the battery separator according to claim 4.
